# EUROPEAN PATENT APPLICATION

(11) **EP 0 851 142 A1**
(43) Date of publication of application: **01.07.1998**
(21) Application number: 97204023.2
(22) Date of filing: 19.12.1997
(51) Int. Cl.: F16F 1/368, B29B 15/10, B29D 31/00, B32B 5/10, B32B 31/00

(54) **Structural spring of fibre-reinforced plastic**

(30) Priority: 24.12.1996 BE 9601078
(71) Applicant: DSM N.V., 6411 TE Heerlen (NL)
(72) Inventor: Marissen, Roelof, 6121 HS Born (NL); Boonen, Petrus Johannes Lamertus, 6081 EK Haelen (NL); Beckers, Jan Marie Hubert, 6181 AM Elsloo (NL)

(57) **Abstract**

Structural spring for absorbing loads, fabricated from fibre-reinforced plastic and characterized in that the structural spring primarily comprises discontinuous fibres, at least a proportion of which is aligned in accordance with the spring's direction of loading envisaged during operation.

## Description

The invention relates to a structural spring for absorbing loads, fabricated from fibre-reinforced plastic. The invention also relates to a process for fabricating such a structural spring. Fibre-reinforced plastic springs are generally known and have been produced commercially for about 15 years now. The structural springs according to the prior art all contain continuous fibres. This is meant to say that the fibres extend over the entire product length without any breaks in them. The use of continuous fibres is considered necessary, by those skilled in the art of structural springs, for absorbing the loads commonly encountered with this type of spring. A known structural spring of the leaf-spring type is described, for example, in EP-A-0134617. This known structural spring takes the form of a sandwich structure and consists of a core section with two outer layers on either side of the core section. The core section contains reinforcing fibres which are randomly oriented with respect to the longitudinal direction of the spring. The outer layers contain continuous reinforcing fibres which are all oriented in the longitudinal direction of the spring. These continuous reinforcing fibres oriented in the longitudinal direction of the spring are necessary to obtain the (flexural) stiffness, (flexural) strength and service life required for the spring.

The drawback of the known spring is that its fabrication requires a large number of operations. In EP-A-0134617, the core section is fabricated first. Then, continuous fibres are applied manually on either side of the core section and are subsequently impregnated with a thermosetting plastic. Then, the assembly is placed into a heated mould, in which the thermosetting plastic is cured and the structural spring is formed. When being placed into the mould, the continuous fibres need to be kept under tensile stress, to ensure that they will retain their orientation and do not, for example, buckle. All these measures are necessary for obtaining a structural spring which satisfies the mechanical demands placed on such a spring.

It is an object of the invention to provide a structural spring which can be fabricated rapidly in one operation and which has, at the same time, the (flexural) stiffness, (flexural) strength and service life required for a structural spring.

To this end, the invention is characterized in that the structural spring primarily contains discontinuous fibres, at least a portion of which is aligned in accordance with the spring's direction of loading envisaged during operation.

The term "discontinuous fibres", within the scope of the present application, refers to fibres whose starting and end point are located within the structural spring, in contrast to the continuous reinforcing fibres of the known structural spring, which are delimited solely by an end face of the spring. The term "primarily" is understood to mean that the discontinuous fibres determine the resistance to deformation and fracture of the spring according to the invention, in contrast to the known spring, where the required stiffness and strength are determined by the uninterrupted fibres. The expression "the direction of loading envisaged during operation" refers to the direction of the resultant force exerted on the spring when the spring is in operation. For a horizontal leaf spring positioned under a lorry, for example, the direction of loading will generally be vertical. For a helical spring positioned on one of its ends the direction of loading is likewise vertical. When considering a structural spring, those skilled in the art will understand immediately which direction of loading of the spring is envisaged.

It is known that plastics reinforced with discontinuous fibres can generally be processed more rapidly to form the end product than is possible with plastics reinforced with continuous fibres. However, this is always at the expense of the mechanical characteristics of the product. Surprisingly, however, the structural spring according to the invention, in which discontinuous fibres instead of continuous fibres are used and in which a portion of the discontinuous fibres is aligned in accordance with the spring's direction of loading envisaged during operation, nevertheless has adequate stiffness, strength and service life.

The weight-average length of the discontinuous fibres is preferably in the range from 20 to 80 mm. A further improvement is thus achieved with regard to, in particular, the strength and the service life. Most preferably, the weight-average length is in the range from 45 to 55 mm. This results in a better distribution of the discontinuous fibres over the structural spring and a consequent further increase in strength. The weight-average fibre length can be determined in a manner known to those skilled in the art. A suitable method consists in a structural spring being exposed to a temperature at which the plastic degrades, but the generally much more thermally stable fibres remain unaffected. Then, the fibres are collected and screened by means of a number of screens having decreasing standardized mesh sizes. From the amount, by weight, of fibres collected from each screen, a distribution is drawn up from which the weight-average fibre length can be obtained in a simple manner.

The structural spring according to the invention preferably contains between 20 and 60 %vol. of discontinuous fibres relative to the total weight of the fibre-reinforced plastic in the spring. Most preferably, the fibre content is between 30 and 50 %vol. relative to the total weight of the fibre-reinforced plastic in the spring.

A structural spring should absorb and release as much elastic energy as possible without fracturing. If, moreover, such a spring is used in the field of transport, the elastic energy absorption capacity should obtain at as low a weight as possible. The structural spring according to the invention has the additional advantage that the elastic energy absorption capacity per unit weight of the spring is relatively high. The elastic energy absorption capacity is defined, within the scope of the present application, as the total area under a force-displacement curve for the structural spring being subjected to a breaking load.

Many different types of structural spring are known. For example, structural springs based on air suspension are used in heavier lorries. In mechanical engineering, cup springs are widely used. Helical and torsional springs, on the other hand, are frequently used in cars, caravans and buses. Leaf springs are likewise frequently used in the field of transport. While the invention is not limited to a particular type of structural spring, the structural spring according to the invention is preferably a leaf spring having an underside and an upper side, the load envisaged during operation causing the tensile stresses to occur at the underside and the compressive stresses to occur at the upper side.

Leaf springs are generally composed of a plurality of layers or leaves. The known fibre-reinforced plastic structural spring, described in EP-A-0134617, comprises 3 layers. Leaf springs made of steel likewise generally have 3 or four and sometimes even more leaves. This type of construction of the known leaf spring is chosen to allow the flexural stiffness of the spring to be set effectively. Said flexural stiffness should not be too high, because the spring in that case cannot effectively absorb or cushion shocks, nor should it be too low, because the spring in that case will exhibit too large a deflection upon loading. The known fibre-reinforced plastic spring can be produced only in a limited number of shapes. A well-designed leaf spring requires such a shape that the tensile and compressive stresses caused by the flexural loading are virtually constant over the entire length of the spring. This is generally achieved by giving the spring a greater height at the position of the centre of the spring (where the bending moment is greatest) than at the ends, where the spring is supported during operation (and the bending moment is therefore negligibly small). The height of the leaf spring here refers to the distance between upper side and underside of the spring. In the case of the known leaf spring, where continuous fibres are used, an increase in the height of the centre of the spring can only be achieved by a reduction in the spring width at the location of the increase in height, since the cross-sectional area must necessarily be approximately constant over the entire length of the spring. An alternative method would be to apply, at the position of the centre of the spring, a plurality of layers comprising continuous fibre-reinforced plastic. In both cases, the production process is complicated and time-consuming. Moreover, the reproducibility is poor. The structural spring according to the invention has the additional advantage that it can be produced rapidly and reproducibly in virtually any shape tailored to the constructional requirements.

The structural spring according to the invention is preferably characterized in that the cross section of the leaf spring, at least at the position of the centre of the spring, is wider at the underside than at the upper side. This results in a further improvement in the strength and service life of the spring. Most preferably, the section of the leaf spring, at least at the position of the centre of the spring, is trapezoidal.

Preferably, the structural spring according to the invention is a single-leaf leaf spring. This results in a further increase in the elastic energy storage capacity. A further advantage of this preferred embodiment is that the service life of the spring is further extended.

The invention also relates to a process for fabricating a structural spring. The process utilises semifinished products which comprise discontinuous fibres in a plastic matrix. Although not essential to the invention, use is preferably made of sheeting. In the process according to the invention, one or more semifinished products, preferably sheets, are applied into an opened compression mould having the shape of the spring, the compression mould is then closed, so that the spring is formed, whereupon the mould is opened and the spring formed is removed, with the proviso that at least a portion of the sheets is applied with the discontinuous fibres aligned in accordance with the structural spring's direction of loading envisaged during operation. In this way, a structural spring is obtained as described hereinabove and in the claims.

The process according to the invention is preferably characterized in that the portion of the sheets applied with the discontinuous fibres aligned in accordance with the structural spring's direction of loading envisaged during operation is at least 80 %wt. of the total weight of the sheets. In this way, the strength of the spring obtained by means of the process is further improved.

Preferably, the process according to the invention is characterized in that the semifinished products in the form of sheets comprise glass fibres and, as the matrix, a thermosetting plastic, said plastic comprising an unsaturated polyester, a monomer which is able to copolymerize with the polyester, and fillers, the volume fraction of glass fibres being between 45 and 55 %vol. relative to the total volume of the semifinished product and the glass fibres having a weight-average fibre length of at least 25 mm.

Semifinished products comprising discontinuous fibres and a plastic as a matrix are generally known. Such semifinished products are commercially available in various embodiments, such as in the form of sheets, in the form of a collection of granules or rods, as a moulding compound etc. The reinforcing fibres in the semifinished product may consist of any suitable material. Examples of suitable fibre material are glass, carbon, aramid, silicon carbide, aluminium oxide, asbestos, ceramic, graphite, metal or a highly stretched plastic such as, for example, stretched ultrahigh molecular weight polyethylene or combinations thereof. Preferably, the fibre material consists of glass, carbon or aramid. The semifinished product may comprise a thermoplastic or a thermosetting plastic.

The thermoplastic can be chosen from all possible thermoplastic (co)polymers such as polyamides (PA), for example nylon-6, nylon-6.6, nylon-4.6, nylon-8, nylon-6.10, nylon-11, nylon-12, etc., polyolefins, for example polypropylene (PP), polyethylene (PE), polytetrafluoroethylene (PTFE), polyphenylene ether (PPE or PPO), etc., amorphous and/or crystalline polyesters such as polyalkylene terephthalates, for example polyethylene terephthalate (PETP or PET), polybutylene terephthalate (PBT), etc., or polyimides (PI) such as, for example, polyetherimide (PEI), polyamideimide (PAI) or polymethyl (meth)acrylate (PMMA), polyether methacrylate (PEMA). It is also possible to use polyphenylene sulphide (PPS), polyvinyls such as polyvinyl alcohol (PVA), polyvinyl acetate (PVAc), ethylene-vinyl acetate (EVA), polyvinyl chloride (PVC), polyvinylidene chloride (PVDC), copolymers of vinyl chloride and vinylidene chloride or polyvinylidene fluoride (PVDF), polyethylene glycol (PETG), styrene-containing copolymers such as polystyrene (PS) which may or may not contain rubber, styrene-acrylonitrile copolymers (SAN), acrylonitrile-butadiene-styrene copolymers (ABS), styrene-maleic anhydride (SMA), polyacrylonitrile (PAN), polyarylenesulphideketone, polyoxymethylene (POM), polycarbonate (PC), polyethers (PEth), polyetherketone (PEK), polyetherketoneketone (PEKK), polyetheretherketone (PEEK), polyacetals, polyacrylic acid, polyurethanes (PUR), polyaryl acid (PAA), cellulose esters, polybenzimidazole (PBI), and blends of the said thermoplastics. The above list of thermoplastic polymers is given as an example. It will be evident that the process according to the invention is not limited to the fabrication of structural springs which comprise the abovementioned thermoplastics.

The thermosetting plastic can be chosen from all possible thermal setting resins such as, for example, resins based on epoxides, unsaturated polyesters, vinyl esters, aminoplastics such as, for example, phenol-formaldehyde, melamine-formaldehyde, etc.

Preferably, the semifinished product comprises glass fibres and, as the matrix, a thermosetting plastic, said plastic containing an unsaturated polyester, a monomer which is able to copolymerize with the polyester, and fillers. In such a semifinished product, the glass fibres generally have a weight-average length of between 5 and 100 mm, the volume fraction of glass fibres generally being between 10 and 55 %vol. Suitable fillers in the semifinished product are, for example, chalk, talc, silica and carbon black. In addition, such semifinished product may contain a thickener. The thickening of the thermosetting plastic, required to obtain the correct viscosity for processing, is generally achieved by the addition of metal oxides and metal hydroxides such as, for example, MgO and Mg(OH)₂ in an amount of 1-10 %wt. of the total weight of the thermosetting plastic without fillers. Such fibre-reinforced unsaturated polyester compositions are known to those skilled in the art under the names 'Sheet Moulding Compound (SMC), Bulk Moulding Compound (BMC), Thick Moulding Compound (TMC), High modulus Moulding Compound (HMC)' and other similar designations.

The unsaturated polyester may be any polyester obtained by the reaction of organic compounds which contain carboxyl and alcohol groups. Generally used for polyesters are diacids and dialcohols. If required, a portion of one of the two types of bifunctional monomer can be replaced by a trifunctional monomer, so that a branched unsaturated polyester is formed.

Vinyl ester polymers, a class of polyesters, can likewise be used in the semifinished product. Vinyl ester polymers are composed of polyols and polyacids having acrylate terminal groups, methacrylate terminal groups or other acrylate terminal groups, possibly substituted by C2-C4-alkyl groups. Suitable polyols are, for example, hydroxyl-terminated polyesters, novolak resins, or polyethers.

The diacid used is preferably an ethylenically unsaturated diacid, in particular an α,β-ethylenically unsaturated diacid such as, for example, fumaric acid, maleic acid, chloromaleic acid, itaconic acid etc., and the corresponding esters or anhydrides.

Suitable alcohols generally contain fewer than 30 carbon atoms. Preference is given to the use of dialcohols selected from the group consisting of ethylene glycol, diethylene glycol, triethylene glycol, 1,2-propanediol, dipropylene glycol, 1,3-propanediol, 1,2-butanediol, 1,3-butanediol, 1,4-butanediol, 2-methyl- 1,3-propanediol, 1,4-pentanediol, 1,4-hexanediol, 1,6-hexanediol, 2,2-dimethylpropanediol, cyclohexanediol, 2,2-bis(hydroxycyclohexyl)propane, 1,2-trimethylolpropane monoallyl ether, pinacol, and/or bisphenol-A.

The monomer copolymerizable with the polyester contains one or more vinyl groups and generally fewer than 50 carbon atoms. Suitable monomers are, for example, of the vinyl aromatic, vinyl ether, vinyl ester, acrylate and/or allyl type. Preferably, the monomer is vinylaromatic.

Vinylaromatic monomers are, for example, selected from the group consisting of styrene, α-methylstyrene, o-, m-, p-methylstyrene, p-chlorostyrene, t-butylstyrene, divinylbenzene, bromostyrene, vinylnaphthalene, α-chlorostyrene and divinylnaphthalene.

Acrylate compounds are selected, for example, from the group consisting of methyl, ethyl, propyl, isopropyl, butyl, isobutyl, phenyl and benzyl acrylate or methacrylate, 2-ethylhexyl (meth)acrylate, dihydrocyclopentadiene acrylate, cyclohexyl (meth)acrylate, butanediol (meth)acrylate, butanediol di(meth)acrylate, (meth)acrylamide, the reaction products of (meth)acrylic acid and phenyl or cresyl glycidyl ethers, propylene glycol di(meth)acrylate, di- and triethylene glycol di(meth)acrylate, di- and tripropylene glycol di(meth)acrylate, hexanediol di(meth)acrylate, trimethylolpropane tri(meth)acrylate.

Vinyl ether, vinyl ester and allyl compounds are chosen, for example, from the group consisting of allyl phthalate, diallyl phthalate, diallyl isophthalate, triallyl cyanurate, diallyl terephthalate, vinyl acetate, vinyl propionate, vinyl pivalate, vinyl ether, vinyl versatate, vinyl propylol ether, divinyl ether, vinyl butylol ether and vinyl benzyl alcohol ethers.

The semifinished products in the form of sheets are generally processed to form the end product by applying one or more sheets in an opened compression mould having the shape of the end product, the compression mould then being closed, so that the end product is formed, whereupon the mould is opened and the end product formed is removed. The semifinished products in the form of sheets are applied in a known manner over only a portion of the end product surface in the compression mould. While the compression mould is being closed, the semifinished products thus flow to locations in the compression mould where the semifinished product had not been applied. This flow serves to ensure that the fibres are well-distributed in the end product. All this means that, during compression-moulding, the fibres should be entrained by the flowing thermosetting plastic. Forming the end product can take place in various ways. For thermosetting plastics, the semifinished products are applied into a compression mould which beforehand has been brought to a temperature suitable for the material. This temperature is generally higher than room temperature. Suitable temperatures, are, for example, in the range from 80 to 150°C. At such temperatures, curing of the matrix of the semifinished products will take place within a short period after application into the mould, as a result of which the end product attains its final shape and can be removed from the compression mould. For thermoplastics, the semifinished products are generally, in a first step, heated to above the melting temperature of the plastic and then, in a second step, applied into a mould which beforehand has been brought to a temperature suitable for the material. This temperature is generally considerably lower than the melting temperature of the plastic. Suitable temperatures are, for example, in the range from 25 to 80°C. By bringing the mould to such a temperature, the plastic is cooled to below the melting temperature and consequently solidifies. As a result, the end product attains its final shape and can be removed from the compression mould.

To illustrate the structural spring and the process according to the invention, a preferred embodiment of the structural spring and the process will be described with reference to the figures. This preferred embodiment can be used on the rear axle of a lorry of, for example, 350 kN.

Figure 1 is a schematic representation of a structural spring according to the invention of the leaf- spring type.

Figure 2 is a side view of the structural spring of Figure 1.

Figure 3 schematically depicts the trapezoidal cross section of the structural spring in which a number of semifinished products are disposed in accordance with the process of the invention.

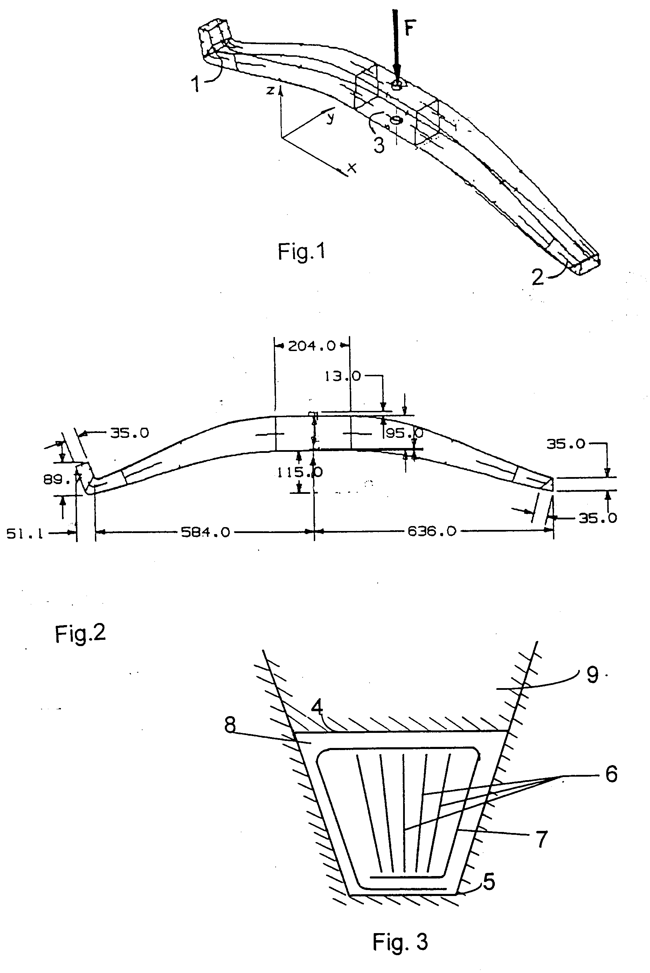

The leaf spring according to the invention has a parabolic shape and has a single leaf, as shown in Figure 1. The longitudinal direction of the spring corresponds to the x-axis, the cross-section is in the (y, z)-plane. The load envisaged during operation is directed along the z-axis and is represented by the resultant force F. For the load shown, the underside of the spring will therefore be subject to tensile stresses and the upper side to compressive stresses. The spring further has two ends 1 and 2, of which one (1) has an upright rim. This rim acts as an anchoring point during operation. The cross section of the spring has an enlargement at the location of the centre 3. This enlargement ensures a uniform distribution of the normal stresses in the spring which are generated by the bending moment. The entire spring consists of unsaturated polyester reinforced with discontinuous fibres, at least a portion of the fibres being aligned in accordance with the spring's direction of loading envisaged during operation. This direction corresponds to the direction of the resultant force F.

The typical dimensions of the structural spring are given in Figure 2 (in mm). The width of the spring is 70 mm. These dimensions are of the same order of magnitude as in the known spring, given the fact that, during operation, the spring according to the invention needs to be fitted underneath the axle of a known lorry. The spring according to the invention is therefore subject to the same geometric constraints as the known spring.

The spring as shown in Figures 1 and 2 is fabricated by 25 semifinished products in the form of sheets being applied in accordance with the geometric pattern of Figure 3. The sheets 6 applied in accordance with the envisaged direction of loading are, in this pattern, additionally wrapped in an identical sheet 7. As a result, the service life of the spring is further improved since delamination in the x-direction is further avoided. The entire stack of sheets is placed into the mould cavity 8. The length of the stack in the longitudinal direction x of the spring (see Figure 1) is 890 mm (in accordance with a lay-up percentage of about 75%) and is dispersed symmetrically with respect to the centre of the spring. The stack of sheets will therefore, during compression (in the course of which the mould section 9 is moved downwards as far as the position shown in Figure 3), exhibit flow, since not the entire mould cavity is filled with semifinished product. As a result, a portion of the fibres of, for example, the sheets 6 will be oriented more or less in accordance with the longitudinal direction of the spring. A portion, however, will retain its original orientation in accordance with the z-direction and will be present, oriented in this direction, in the structural spring. The temperature of the mould depends on the type of semifinished product used and in this case was 140°C. The sheet was an HMC based on unsaturated polyester. The composition of the HMC material is given in Table 1. The sheets were compression-moulded to form the end product with the aid of an SMC press from Hoesch, Germany, with a platen speed of 3 mm/sec and a ram pressure of 150 bar. After pressing, the press was kept closed for a further 20 min, to allow the unsaturated polyester to cure. Then, the mould was opened and the spring obtained was taken from the mould. The spring had a cross section as shown in Figure 3, where 4 is the tensile stress side (the underside of the spring during operation) and 5 the compressive stress side (the upper side of the spring during operation).

**Table 1**

| Composition of HMC | |
|---|---|
| Unsaturated resin Atlac™ XP 810 | 35 %wt. |
| Additives (inhibitor, initiator, release agent, pigment) | 5.5 %wt. |
| Chalk | 17 %wt. |
| Glass fibres OCF™ RO7 EX1 | 42 %wt |

The mechanical properties of the spring obtained were then determined.
To this end, the spring was placed on a flat plate and loaded centrally with a downward force, a Zwick 1475 testing machine being used for this purpose. The maximum breaking force at room temperature of the spring was 100 kN for the geometry given in Figures 1, 2 and 3. The flexural fatigue strength at room temperature of the spring was 300,000 load cycles of between 27 and 77 kN. This is entirely comparable with the flexural strength and fatigue strength of a commercially available steel leaf spring used for this purpose.

## Claims

1. Structural spring for absorbing loads, fabricated from fibre-reinforced plastic, characterized in that the structural spring primarily contains discontinuous fibres, at least a portion of which is aligned in accordance with the spring's direction of loading envisaged during operation.

2. Structural spring according to Claim 1, characterized in that the weight-average length of the fibres is in the range from 20 to 80 mm.

3. Structural spring according to any one of Claims 1-2, characterized in that the volume fraction of fibres is in the range from 20 to 60 %vol. relative to the total volume of the fibre-reinforced plastic in the spring.

4. Structural spring according to any one of Claims 1-3, characterized in that the volume fraction of fibres is in the range from 30 to 50 %vol. relative to the total volume of the fibre-reinforced plastic in the spring.

5. Structural spring according to any one of Claims 1-4, characterized in that the structural spring is a leaf spring having an underside and an upper side, the load envisaged during operation causing the tensile stresses to occur at the underside and the compressive stresses to occur at the upper side.

6. Structural spring according to Claim 5, characterized in that the cross section of the leaf spring, at least at the position of the centre of the spring, is wider at the underside than at the upper side.

7. Structural spring according to Claim 6, characterized in that the cross section of the leaf spring, at least at the position of the centre of the spring, is trapezoidal.

8. Structural spring obtainable according to a process as described in any one of Claims 9-11.

9. Process for fabricating a structural spring according to any one of Claims 1-7, wherein one or more semifinished products in the form of sheets, comprising discontinuous fibres in a plastic matrix, are applied into an opened compression mould having the shape of the spring, the compression mould is then closed, so that the spring is formed, whereupon the mould is opened and the spring formed is removed, with the proviso that at least a portion of the sheets is applied with the discontinuous fibres aligned in accordance with the structural spring's direction of loading envisaged during operation.

10. Process for fabricating a structural spring according to Claim 9, wherein the portion of the semifinished products in the form of sheets is applied with the discontinuous fibres aligned in accordance with the structural spring's direction of loading envisaged during operation is at least 80 %wt. of the total weight of the sheets.

11. Process for fabricating a structural spring according to any one of Claims 9-10, wherein the semifinished products in the form of sheets comprise glass fibres and, as the matrix, a thermosetting plastic, said plastic comprising an unsaturated polyester, a monomer which is able to copolymerize with the polyester, and fillers, the volume fraction of glass fibres being between 30 and 50 %vol. relative to the total volume of the semifinished product and the glass fibres having a weight-average fibre length of at least 25 mm.
